Europäisches Patentamt

European Patent Office

Office européen des brevets

(11) Publication number: **0 179 027**
A2

# EUROPEAN PATENT APPLICATION

(21) Application number: 85830258.1

(22) Date of filing: 14.10.85

(51) Int. Cl.⁴: **A 23 G 9/12**
**A 23 G 9/22**

(30) Priority: 15.10.84 IT 5392184 U

(43) Date of publication of application:
23.04.86 Bulletin 86/17

(84) Designated Contracting States:
AT BE CH DE FR GB IT LI LU NL SE

(71) Applicant: BREVETTI GAGGIA S.p.A.

I-20087 Robecco sul Naviglio(IT)

(72) Inventor: Pandolfi, Alberto
Via San Giacomo 2
I-20142 Milano(IT)

(74) Representative: Notaro, Giancarlo et al,
c/o Jacobacci-Casetta & Perani S.p.A. Via Alfieri, 17
I-10121 Torino(IT)

(54) Ice-cream maker, particularly for domestic use.

(57) An ice-cream maker, particularly for domestic use, includes a fixed tank (2) a container (3) for the product placed within the said tank (2) and removable therefrom, means (7) for mixing the product within the said container (3) and a freezer circuit including an evaporator coil (10) associated with the fixed tank (2), a compressor (14) having its inlet (13) connected to the outlet end (11) of the evaporator coil (10), a capillary tube (21) communicating with the inlet end (23) of the evaporator coil (10), a pipe (16, 19) for connecting the outlet of the compressor (14) with the capillary tube (21) and a condenser (17) interposed in the said pipe (16, 19).

The ice-cream maker further includes and additional pipe (24) which puts the outlet (15) of the compresser (14) into direct communication with the inlet end (23) of the evaporator coil (10), a valve (25) interposed in the additional pipe (24) to control the flow of fluid through the latter, and means (26, 30) for controlling the valve.

EP 0 179 027 A2

./...

FIG. 1

Ice-cream maker, particularly for domestic use.

The present invention provides ice-cream makers, particularly for domestic use, of known kind, comprising
- a fixed tank,
- a container for the product, placed within the said tank and removable from it,
- means for mixing the product within the said container,
- a freezer circuit, including,
- an evaporator coil attached to the fixed tank,
- a compressor having its inlet connected to the outlet end of the evaporator coil,
- a capillary tube, communicating with the inlet end of the evaporator coil,
- a pipe for connecting the compressor outlet to the capillary tube, and
- a condenser interposed in the said pipe.

In ice-cream makers of the kind described above, the problem arises of avoiding the formation of ice in the space between the ice-cream container and the fixed tank. The said container can have moisture on its outer surface at the moment it is inserted into the tank after being taken out to be washed. Upon subsequent use of the ice-cream maker, this moisture freezes and can make removal of the container from the tank impossible.

All the solutions of the aforesaid problem which have so far been suggested are not entirely satisfactory from the standpoint of simplicity and reliability of construction and/or from the standpoint of convenience in use.

0179027

- 2 -

The object of this invention is to provide an ice-cream maker which allows this problem to be solved by simple, reliable means which are practical in use.

With a view to achieving this object, this invention provides an ice-cream maker of the kind referred to at the beginning of this description, characterised in that the ice-cream maker further includes,
- an additional pipe which puts the outlet of the compressor in direct communication with the inlet end of the evaporator coil,
- a valve interposed in the additional pipe, for controlling the flow of fluid through the latter, and
- means for controlling the valve.

By virtue of the aforesaid characteristic it is possible to send part of the fluid delivered from the compressor directly into the evaporator coil, for the purpose of increasing the temperature of the latter and permitting defrosting to remove ice which may have formed in the area between the wall of the tank and the outer surface of the removable container.

In a preferred embodiment the said valve is a solenoid valve the opening of which is controlled by a manual electrical switch. The said control means also include sensor means for sensing the temperature of the refrigerant fluid downstream of the evaporator and means for controlling closure of the solenoid valve when the temperature sensed by the said sensor means exceeds a predetermined threshold value.

Further characteristics and advantages of the invention will appear from the following description, with reference to the appended drawings, given purely by way of non-limiting example, in which:

Figure 1 illustrates diagrammatically an ice-cream maker according to the invention, and

Figure 2 illustrates a variant of Figure 1.

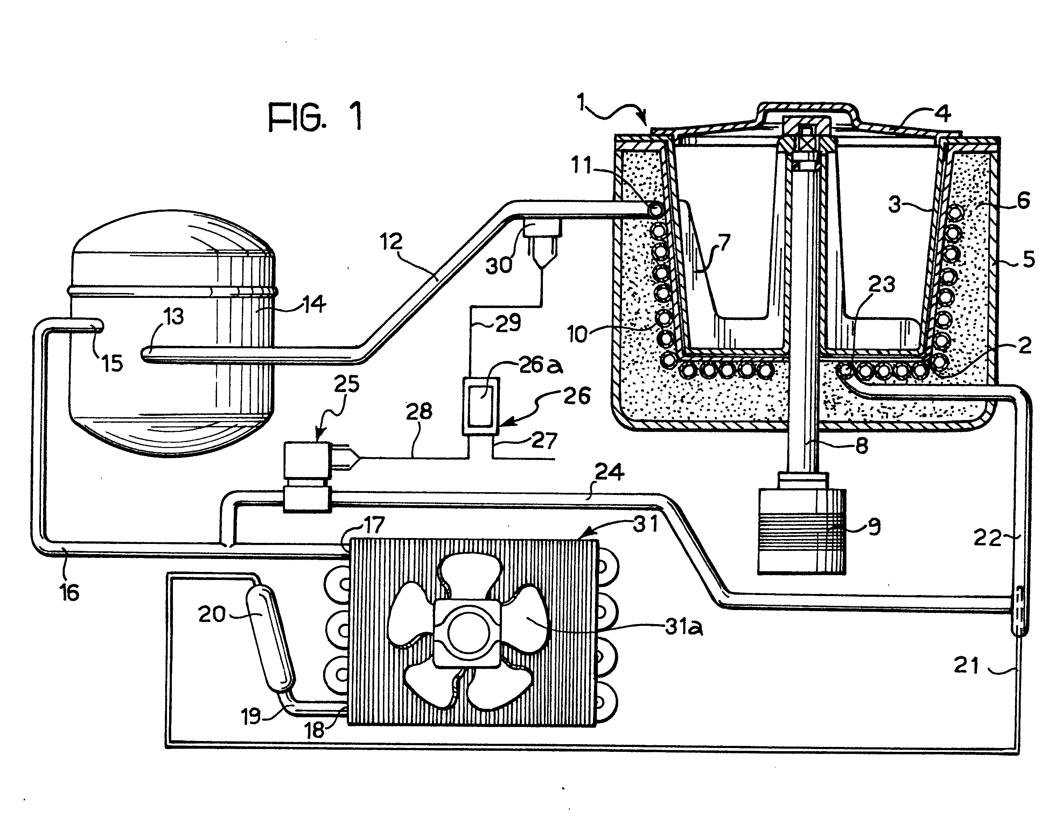

Figure 1 illustrates an ice-cream maker 1 for domestic use including a fixed tank 2 and a container 3 for the product to be frozen, disposed within the tank 2 and removable from it. A lid 4 is associated with the container 3. The fixed tank 2 is defined by a receptacle located within a casing 5, with the interposition of thermally insulating material 6.

Within the container 3 there is also provided, in a known manner, a rotor 7 for mixing the product, mounted upon a shaft 8 driven by an electric motor 9.

The ice-cream maker 1 has an associated freezer circuit, the components of which are contained within the body (not shown) of the ice-cream maker. In the figure, the actual positions of the various components within the body of the ice-cream maker is not illustrated, in order to show these components and the connections between them more clearly.

The freezer circuit of the ice-cream maker comprises an evaporator coil 10, associated with the fixed tank 2, having an outlet end 11 connected by a pipe 12 to the inlet 13 of a hermetically sealed compressor 14. The outlet 15 of the sealed compressor 14 is connected by a pipe 16 to the inlet 17 of a condenser 31 having an outlet 18 connected by a pipe 19 and a filter 20 to a capillary tube 21 leading into a pipe 22 which terminates at the outlet end 23 of the evaporator coil 10. The condenser 31 consists of a radiator, provided with an electric fan 31a.

The freezer unit also includes an additional pipe 24 which puts the pipe 16 into direct communication with the pipe 22 and, consequently, the outlet 15 of the sealed compressor 14 with the inlet end 23 of the evaporator coil 10. The flow of fluid through the additional pipe 24 is controlled by a solenoid valve 25 operable by means of an electrical switch 26 provided with a manual push-button 26a. The switch 26 is connected by a line 27 to the electrical mains supply, by a line 28 to the solenoid valve 25 and by a line 29 to a thermostat 30 capable of causing closure of the solenoid valve 25 when the temperature of the fluid leaving the evaporator coil exceeds a predetermined threshold value, for example $16^{O}$C. A warning light (not shown) is provided to signal when the solenoid valve is in its open condition.

With the help of the device described above, the operator can, at any moment, for the purpose of preventing and/or eliminating the formation of ice in the area between the fixed tank 2 and the removable container 3, press the button 26a of the switch 26 so as to allow part of the hot fluid at the outlet of the compressor 14 to be sent directly into the evaporator 10. When the temperature of the fluid at the outlet from the evaporator exceeds the threshold value for which the thermostat 30 is set, the latter induces closure of the solenoid valve 25.

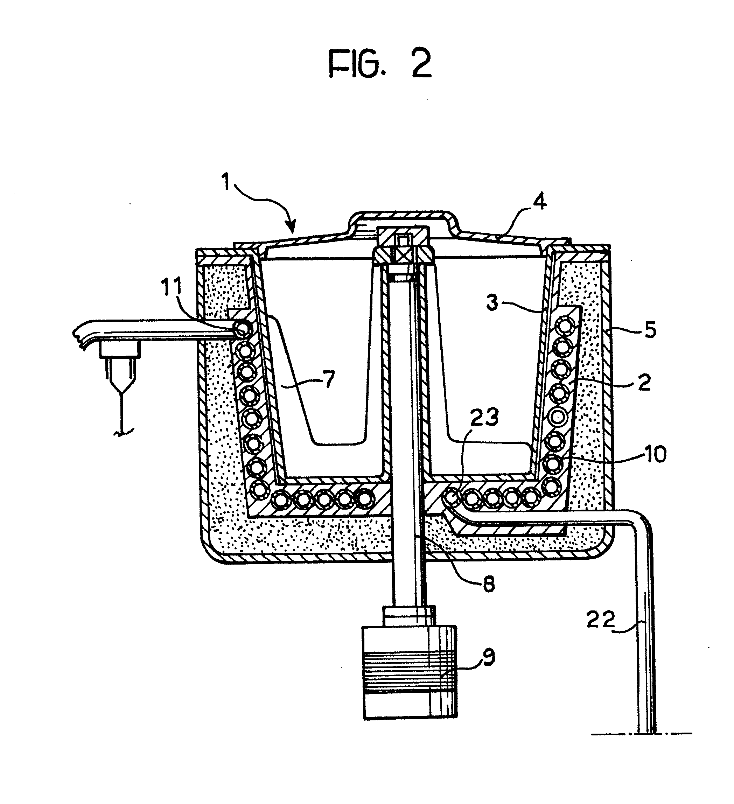

Figure 2 illustrates a constructional variant of the ice-cream maker in Figure 1, in which the evaporator coil 10 is embedded in the fixed tank 2.

Naturally, while the principle of the invention remains the same, the details of construction may be varied widely with respect to what has been described without thereby departing from the scope of this invention.

CLAIMS

1.    Ice-cream maker, particularly for domestic use,
comprising:
    a fixed tank (2),
    a container (3) for the product placed within the
said tank (2) and removable from it,
    means (7) for mixing the product within the said
container (3),
    a freezer circuit, including
    an evaporator coil (10) attached to the fixed tank
(2),
    a compressor (14) having its inlet (13) connected to
the outlet end (11) of the evaporator coil (10),
    a capillary tube (21) communicating with the inlet end
(23) of the evaporator coil (10),
    a pipe (16, 19) for connecting the outlet of the
compressor (14) with the capillary tube (21), and
    a condenser (17) interposed in the said pipe (16, 19),
    characterised in that the ice-cream maker further
includes an additional pipe (24) which puts the outlet
(15) of the compressor (14) in direct communication with
the inlet end (23) of the evaporator coil (10),
    a valve (25) interposed in the additional pipe (24),
for controlling the flow of fluid through the latter,
and
    means (26, 30) for controlling the valve.

2.    Ice-cream maker according to Claim 1,
characterised in that the said valve is a solenoid valve
(25) the opening of which is controlled by a manual
electrical switch (26).

3.    Ice-cream maker according to Claim 2, characterised in that the said control means moreover include sensor means (30) for sensing the temperature of the refrigerant fluid downstream of the evaporator coil (10) and means (30) for effecting closure of the solenoid valve (25) when the temperature recorded by the said sensor means exceeds a predetermined threshold value.

4.    Ice-cream maker according to Claim 1, characterised in that the evaporator coil (10) surrounds the outer surface of the fixed tank (2).

5.    Ice-cream maker according to Claim 1, characterised in that the evaporator coil is embedded within the fixed tank (2).

FIG. 1

1/2

0179027

# FIG. 2